(19) Europäisches Patentamt
European Patent Office
Office européen des brevets

(11) **EP 4 369 251 A1**

(12) **EUROPEAN PATENT APPLICATION**

(43) Date of publication:
**15.05.2024 Bulletin 2024/20**

(21) Application number: **22383087.8**

(22) Date of filing: **11.11.2022**

(51) International Patent Classification (IPC):
**G06N 3/044** (2023.01)   **G06N 3/045** (2023.01)
**G06N 3/0464** (2023.01)   **G06N 3/0495** (2023.01)
**G06N 3/048** (2023.01)   **G06N 3/084** (2023.01)

(52) Cooperative Patent Classification (CPC):
**G06N 3/0464; G06N 3/044; G06N 3/045;**
**G06N 3/0495;** G06N 3/048; G06N 3/084;
G06N 3/09

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Multiverse Computing S.L.**
**20014 Donostia-San Sebastian (ES)**

(72) Inventors:
• **S. JAHROMI, Saeed**
**San Sebastián (ES)**
• **ORUS, Roman**
**San Sebastián (ES)**

(74) Representative: **Balder IP Law, S.L.**
**Paseo de la Castellana 93**
**5ª planta**
**28046 Madrid (ES)**

(54) **SYSTEMS AND METHODS FOR TENSORIZING CONVOLUTIONAL NEURAL NETWORKS**

(57)    A system and method for improving a convolutional neural network (CNN) are described herein. The system includes a processor receiving a weight tensor having N parameters, the weight tensor corresponding to a convolutional layer of the CNN. The processor factorizes the weight tensor to obtain a corresponding factorized weight tensor, the factorized weight tensor having M parameters, where M<N. The processor supplies the factorized weight tensor to a classification layer of the CNN, thereby generating an improved CNN. In an embodiment, the processor (a) determines a rank of the weight tensor and (b) decomposes the weight tensor into a core tensor and a number R of factor matrices, where R corresponds to the rank of the weight tensor. In another embodiment, the processor (a) determines a decomposition rank R and (b) factorizes the weight tensor as a sum of a number R of tensor products.

FIG. 3

EP 4 369 251 A1

## Description

### FIELD

Various embodiments are described herein that generally relate to systems and methods for tensorizing convolutional neural networks.

### BACKGROUND

The following paragraphs are provided by way of background to the present disclosure. They are not, however, an admission that anything discussed therein is prior art or part of the knowledge of persons skilled in the art.

Deep Neural Networks (DNN) have been used in applications both in science and engineering, for example in those that involve large amounts of data. Problems such as image classification and object detection can be highly demanding in many industrial applications. Among different machine learning (ML) approaches for image classification, convolutional neural networks (CNN) can be used.

CNNs have been useful in the field of image classification for their ability to extract and learn the most relevant features (e.g., colors, shapes, and other patterns) of images from different classes. However, in order to detect very small and sensitive features in image data, usually modern architectures with a large number of parameters are used. Despite their success in image vision tasks, CNNs are known to be over-parametrized, and they may contain a significant number of parameters when working with large amounts of complex data. This represents a bottleneck on the speed and the accuracy of CNNs, increasing the amount of computational resources required for training, the training and inference times, and sometimes reducing the quality of results. In industrial applications such as defect detection, models must show high performance and accuracy.

There is a need for a system and method that addresses the challenges and/or shortcomings described above.

### SUMMARY OF VARIOUS EMBODIMENTS

Various embodiments of a system and method for tensorizing convolutional neural networks (tensor CNN) are provided according to the teachings herein.

According to one aspect of the invention, there is disclosed a system for improving a convolutional neural network. The system comprises at least one processor configured to: receive at least one weight tensor having N parameters, each of the at least one weight tensor corresponding to a convolutional layer of the convolutional neural network; factorize the at least one weight tensor to obtain a corresponding factorized weight tensor, the factorized weight tensor having M parameters, wherein $M < N$; and supply the factorized weight tensor to a classification layer of the convolutional neural network, thereby generating an improved convolutional neural network.

In at least one embodiment, the at least one processor configured to determine a rank of the at least one weight tensor and decompose the at least one weight tensor into a core tensor and a number $R$ of factor matrices, where $R$ corresponds to the rank of the weight tensor.

In at least one embodiment, the at least one processor configured to: provide a number $R$ of factorization ranks $\chi_i$ for $i = 1 ... R$, where $R$ corresponds to the rank of the weight tensor such that each $\chi_i$ is upperbounded by a size of a corresponding dimension $D_i$.

In at least one embodiment, the factor matrices and the core tensor have $(D_1 \times \chi_1 + D_2 \times \chi_2 + \cdots + D_R \times \chi_R) + (\chi_1 \times \chi_2 \times ... \times \chi_R)$ trainable parameters.

In at least one embodiment, the rank of the weight tensor $R = 4$ and the dimensions $D_i$ are $T$, $W$, $H$, and $C$, where $T$ is a number of output channels, $W$ is a width of features in the classification layer, $H$ is a height of features in the classification layer, and $C$ is a number of input channels.

In at least one embodiment, the at least one processor is configured to determine a decomposition rank $R$ and factorize the weight tensor as a sum of a number $R$ of tensor products.

In at least one embodiment, the sum of the number $R$ of tensor products is equal to

$$\sum_{r=1}^{R} \mathbf{u}_r^{(1)} \circ \mathbf{u}_r^{(2)} \circ \cdots \circ \mathbf{u}_r^{(N)}$$, where $r$ is a summation index from 1 to $R$, and each of $\mathbf{u}_r^{(1)}, \mathbf{u}_r^{(2)}, \cdots, \mathbf{u}_r^{(N)}$ is a one-dimensional vector.

In at least one embodiment, the at least one processor is configured to define the classification layer as a rank-$N$ tensor, where $N$ corresponds to a rank of a feature network of the convolutional neural network, where the feature network is comprised of the factorized weight tensor corresponding to each of the at least one weight tensor.

In at least one embodiment, the at least one processor is configured to contract the factorized weight tensor with a weight tensor of the classification layer to obtain a tensorized regression layer.

In at least one embodiment, the at least one processor is configured to produce a class of an input using the improved convolutional neural network.

According to another aspect of the invention, there is disclosed a method for improving a convolutional neural network. The method involves receiving at least one weight tensor having N parameters, each of the at least one weight tensor corresponding to a convolutional layer of the convolutional neural network; factorizing the at least one weight tensor to obtain a corresponding factorized weight tensor, the factorized weight tensor having $M$ parameters, wherein $M < N$; and supplying the factorized weight tensor to a classification layer of the convolutional neural network, thereby generating an improved convolutional neural network.

In at least one embodiment, the method involves determining a rank of the at least one weight tensor and decomposing the at least one weight tensor into a core tensor and a number $R$ of factor matrices, where $R$ corresponds to the rank of the weight tensor.

In at least one embodiment, the method involves providing a number $R$ of factorization ranks $\chi_i$ for i = 1 ... $R$, where $R$ corresponds to the rank of the weight tensor such that each $\chi_i$ is upper-bounded by a size of a corresponding dimension $D_i$.

In at least one embodiment, the factor matrices and the core tensor have $(D_1 \times \chi_1 + D_2 \times \chi_2 + \cdots + D_R \times \chi_R) + (\chi_1 \times \chi_2 \times \cdots \times \chi_R)$ trainable parameters.

In at least one embodiment, the rank of the weight tensor $R = 4$ and the dimensions $D_i$ are $T$, $W$, $H$, and $C$, where $T$ is a number of output channels, $W$ is a width of features in the classification layer, $H$ is a height of features in the classification layer, and $C$ is a number of input channels.

In at least one embodiment, the method involves determining a decomposition rank $R$ and factorizing the weight tensor as a sum of a number $R$ of tensor products.

In at least one embodiment, the sum of the number $R$ of tensor products is equal to

$$\sum_{r=1}^{R} \mathbf{u}_r^{(1)} \circ \mathbf{u}_r^{(2)} \circ \cdots \circ \mathbf{u}_r^{(N)}$$

, where $r$ is a summation index from 1 to $R$, and each of $\mathbf{u}_r^{(1)}, \mathbf{u}_r^{(2)}, \cdots, \mathbf{u}_r^{(N)}$ is a one-dimensional vector.

In at least one embodiment, the method involves defining the classification layer as a rank-$N$ tensor, where $N$ corresponds to a rank of a feature network of the convolutional neural network, where the feature network is comprised of the factorized weight tensor corresponding to each of the at least one weight tensor.

In at least one embodiment, the method involves contracting the factorized weight tensor with a weight tensor of the classification layer to obtain a tensorized regression layer.

In at least one embodiment, the method involves producing a class of an input using the improved convolutional neural network.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

## BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1 shows a block diagram of an example embodiment of a system for tensorizing a convolutional neural network (CNN).

FIG. 2 shows a block diagram of an example embodiment of a CNN architecture.

FIG. 3 shows a flow chart of an example embodiment of a method for tensorizing a CNN.

FIG. 4 shows a schematic diagram of an example of a rank-4 convolution weight tensor.

FIG. 5 shows a schematic diagram of an example factorization of the convolution weight tensor of FIG. 4.

FIG. 6 shows a block diagram of an example decomposition of a rank-3 tensor.

FIG. 7 shows a block diagram of an example embodiment of a CNN showing a tensor regression layer (TRL).

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object-oriented programming. The program code may be written in $C^{++}$, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

In accordance with the teachings herein, there are provided various embodiments of systems and methods for tensorizing convolutional neural networks, and computer products for use therewith.

## 1 Overview

In some cases, CNNs can be over-parametrized and contain a significant number of parameters when working with large amounts of complex data. This represents a bottleneck on the speed and the accuracy of CNNs, increasing the amount of computational resources required for training, the training and inference times, and sometimes reducing the quality of results. In industrial applications such as defect detection, models must show high performance and accuracy. For this reason, it may be beneficial or necessary to reduce the number of parameters in a CNN without sacrificing their accuracy. In at least one of the embodiments described in accordance with the teachings herein, quantum-inspired tensor network methods and other ideas from quantum physics are leveraged to improve the architecture of CNNs.

### 2.1 Basic Definitions

*Tensor:* A multidimensional array of complex numbers.

*Tensor Rank:* Number of the dimensions of a tensor.

*Bond dimension:* Size of the dimensions of the tensors which is also called virtual dimension; controls the size of the input and output of a CNN as well as the amount of correlation between data.

*Tensor network diagrams:* A graphical notation in which each tensor is replaced by an object such as a circle or square, and its dimensions denoted by links (or "legs") connected to the object.

*Tensor contraction:* Multiplication of tensors along their shared dimension, i.e., summation over their shared indices.

*Tensor factorization:* Decomposition of a tensor to two or more pieces by singular value decomposition (SVM) or other numerical techniques.

*Factorization rank:* Size of the truncated dimensions of the factorized tensors.

### 2.2 System Structure

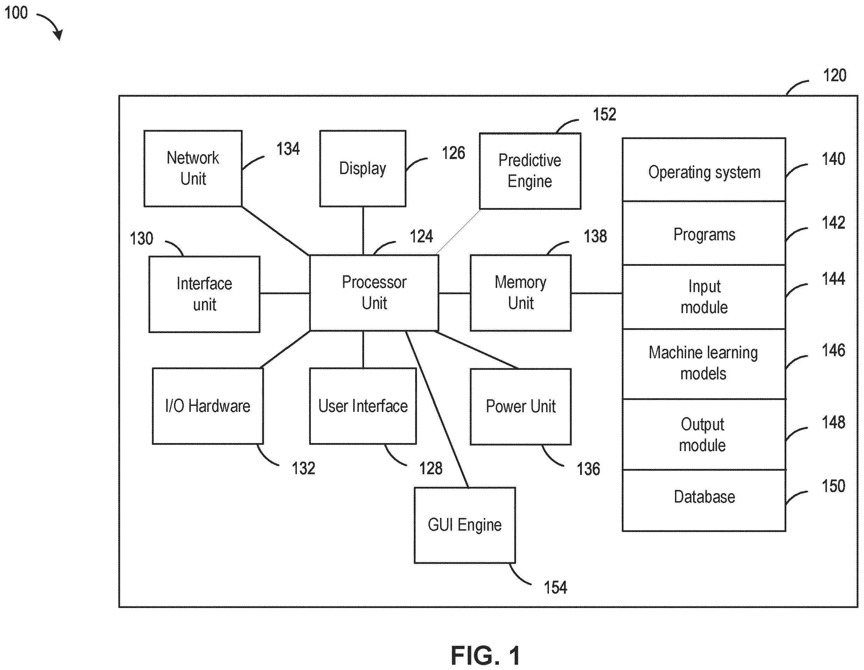

Reference is first made to FIG. 1, showing a block diagram of an example embodiment of system 100 for tensorizing convolutional neural networks. The system 100 includes at least one server 120. The server 120 may communicate with one or more user devices (not shown), for example, wirelessly or over the Internet. The system 100 may also be referred to as a machine learning system when used as such.

The user device may be a computing device that is operated by a user. The user device may be, for example, a smartphone, a smartwatch, a tablet computer, a laptop, a virtual reality (VR) device, or an augmented reality (AR) device. The user device may also be, for example, a combination of computing devices that operate together, such as a smartphone and a sensor. The user device may also be, for example, a device that is otherwise operated by a user, such as a drone, a robot, or remote-controlled device; in such a case, the user device may be operated, for example, by a user through a personal computing device (such as a smartphone). The user device may be configured to run an application (e.g., a mobile app) that communicates with other parts of the system 100, such as the server 120.

The server 120 may run on a single computer, including a processor unit 124, a display 126, a user interface 128, an interface unit 130, input/output (I/O) hardware 132, a network unit 134, a power unit 136, and a memory unit (also referred to as "data store") 138. In other embodiments, the server 120 may have more or less components but generally function in a similar manner. For example, the server 120 may be implemented using more than one computing device.

The processor unit 124 may include a standard processor, such as the Intel Xeon processor, for example. Alternatively, there may be a plurality of processors that are used by the processor unit 124, and these processors may function in parallel and perform certain functions. The display 126 may be, but not limited to, a computer monitor or an LCD display such as that for a tablet device. The user interface 128 may be an Application Programming Interface (API) or a web-based application that is accessible via the network unit 134. The network unit 134 may be a standard network adapter such as an Ethernet or 802.11x adapter.

The processor unit 124 may execute a predictive engine 152 that functions to provide predictions by using machine learning models 146 stored in the memory unit 138. The predictive engine 152 may build a predictive algorithm through machine learning. The training data may include, for example, image data, video data, audio data, and text.

The processor unit 124 can also execute a graphical user interface (GUI) engine 154 that is used to generate various GUIs. The GUI engine 154 provides data according to a certain layout for each user interface and also receives data input or control inputs from a user. The GUI then uses the inputs from the user to change the data that is shown on the current user interface, or changes the operation of the server 120 which may include showing a different user interface.

The memory unit 138 may store the program instructions for an operating system 140, program code 142 for other applications, an input module 144, a plurality of machine learning models 146, an output module 148, and a database 150. The machine learning models 146 may include, but are not limited to, image recognition and categorization algorithms based on deep learning models and other approaches. The database 150 may be, for example, a local database, an external database, a database on the cloud, multiple databases, or a combination thereof.

In at least one embodiment, the machine learning models 146 include a combination of convolutional and recurrent neural networks. Convolutional neural networks (CNNs) may be designed to recognize images or patterns. CNNs can perform convolution operations, which, for example, can be used to classify regions of an image, and see the edges of an object recognized in the image regions. Recurrent neural networks (RNNs) can be used to recognize sequences, such as text, speech, and temporal evolution, and therefore RNNs can be applied to a sequence of data to predict what will occur next. Accordingly, a CNN may be used to read what is happening on a given image at a given time, while an RNN can be used to provide an informational message.

The programs 142 comprise program code that, when executed, configures the processor unit 124 to operate in a particular manner to implement various functions and tools for the system 100.

## 3 Tensorizing Convolutional Neural Networks

### 3.1 Convolutional Neural Networks

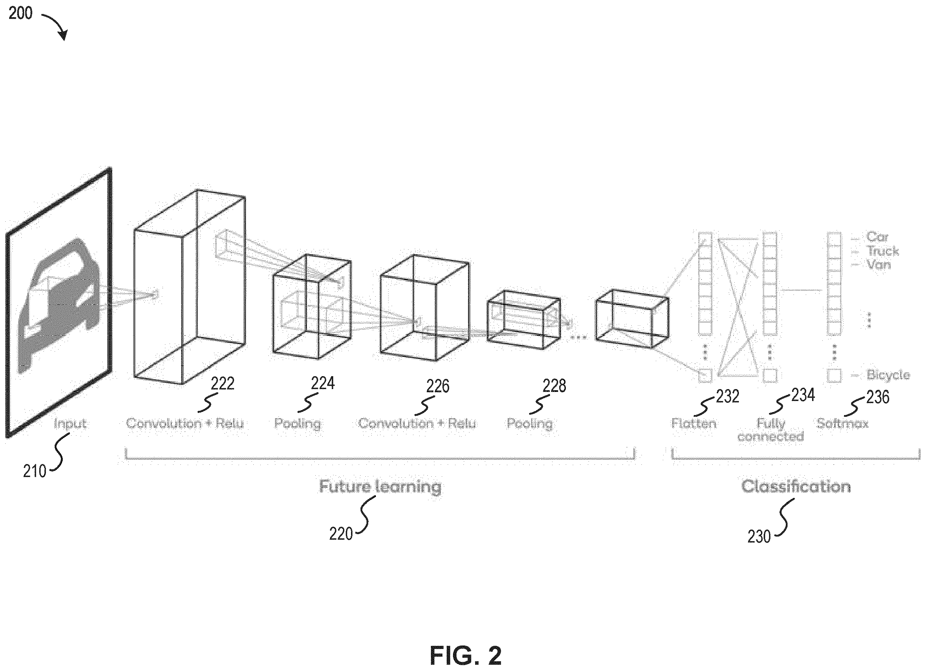

FIG. 2 shows an example of a CNN 200 to be tensorized by the system 100. The CNN 200 takes an input 210, which contains, for example, an input image or data. The CNN 200 can be divided into two major components: convolutional layers 220 (also referred to as "future learning") and classification layers 230.

The convolutional layers 220 comprise one or more convolutional and pooling layers, where the convolution is supplemented by a rectified linear unit (ReLU). The convolutional layers 220 may comprise, for example, a first convolution + ReLU 222, a first pooling 224, a second convolution + ReLU 226, and a second pooling 228, as well as optional additional convolution + ReLU or pooling. The convolutional layers 220 may extract features in different channels of the input 210. For example, one layer can detect edges, another can detect circles, another can detect sharpness of color. Each convolutional layer may include a weight tensor associated with the layer, such as a rank-4 tensor. Alternatively, the weight tensors associated with each respective convolutional layer may be stored in a separate data structure.

The classification layers 230 are a classification (regression) network that comprises one or more processing steps in one or more layers, labelled as flatten 232, fully connected 234, and Softmax 236. For example, a single or multilayer feature extraction network in which the most relevant features of the input 210 is extracted via the convolutional layers 220 (e.g., a series of convolutional and pooling layers), as well as the classification layers 230 (e.g., flatten, fully connected, and Softmax), in which the learned features are processed by a standard neural network (NN) to predict the label of the input 210. The classification layers 230 may classify the input 210, putting it into a class, such as cat or dog.

### 3.2 Method Overview

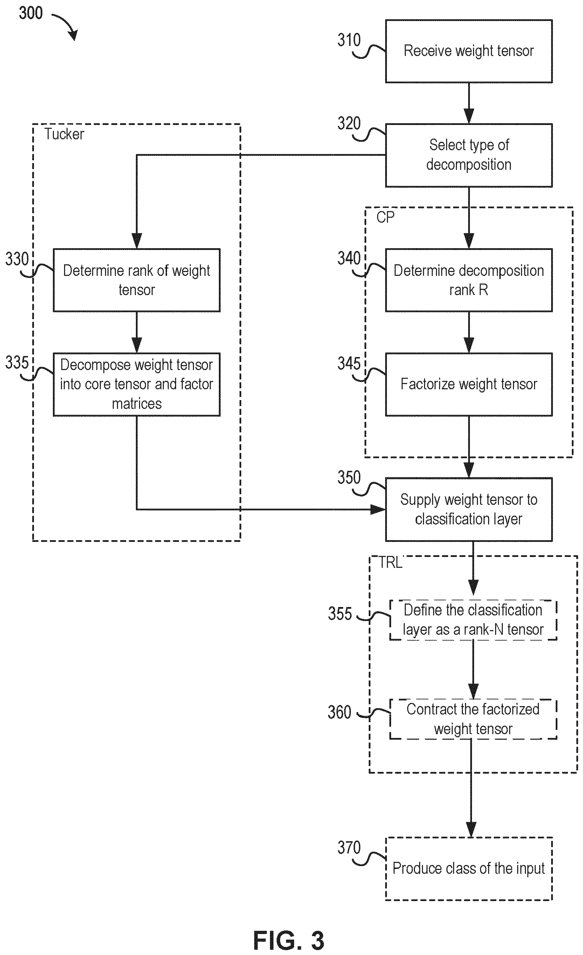

FIG. 3 shows a flow chart of an example embodiment of a method 300 for tensorizing a CNN. The method 300 may be performed by the system 100. The CNN tensorized by the method 300 may be the CNN 200 shown in FIG. 2.

At 310, the system 100 receives a weight tensor for use with a type of decomposition for tensorizing a CNN. The weight tensor may correspond to a weight tensor of a convolutional layer of the CNN.

At 320, the system 100 selects a type of decomposition. The types comprise Tucker decomposition (comprising steps 330 and 335), Canonical Polyadic (CP) decomposition (comprising steps 340 and 345). The method 300 may treat block 320 as a decision block. In the case block 320 is a decision block, the system 100 may, for example, obtain an input that identifies whether to carry out Tucker decomposition, or CP decomposition. Alternatively, block 320 may be optional, as the system 100 may already be instructed to carry out one particular type of decomposition in advance.

At 330, the system 100 begins Tucker decomposition by determining the rank of a weight tensor. The rank of the weight tensor is determined to be rank-4, according to the structure of a convolutional network. The steps for Tucker decomposition are described in further detail herein under section 3.3.

At 335, the system 100 continues Tucker decomposition by decomposing the weight tensor into a core tensor and factor matrices. In at least one embodiment, step 330 is optional, and the system 100 may begin Tucker decomposition at step 335.

At 340, the system 100 begins CP decomposition by determining a decomposition rank $R$. The steps for CP decomposition are described in further detail herein under section 3.4.

At 345, the system 100 continues CP decomposition by factorizing the weight tensor.

At 350, the system 100 supplies the factorized weight tensor to the classification layer of the CNN.

At 355, optionally, the system 100 begins TRL processing by defining a classification layer as a rank-N tensor. The steps for TRL processing are described in further detail herein under section 3.5.

At 360, optionally, the system 100 continues TRL processing by contracting the factorized weight tensor of the regression (classification) layer with the factorized weight tensor supplied at 350 to obtain a tensorized regression layer.

At 370, the system 100 produces a class of an input fed into the CNN. Block 370 in an optional step, as a possible use case for the method 300 is to optimize the architecture of the CNN to an end-user that will then use the CNN to classify its own inputs.

The system 100 may carry out some or all of the steps of method 300 iteratively to optimize the CNN. For example, the system 100 may carry out steps 330 and 335 iteratively multiple layers. The system 100 may carry out some or all of the steps of method 300 in parallel. For example, the system 100 may carry out steps 330 and 335 on one processor for one layer while carrying out steps 330 and 335 on another processor for another layer.

## 3.3 Tucker Decomposition

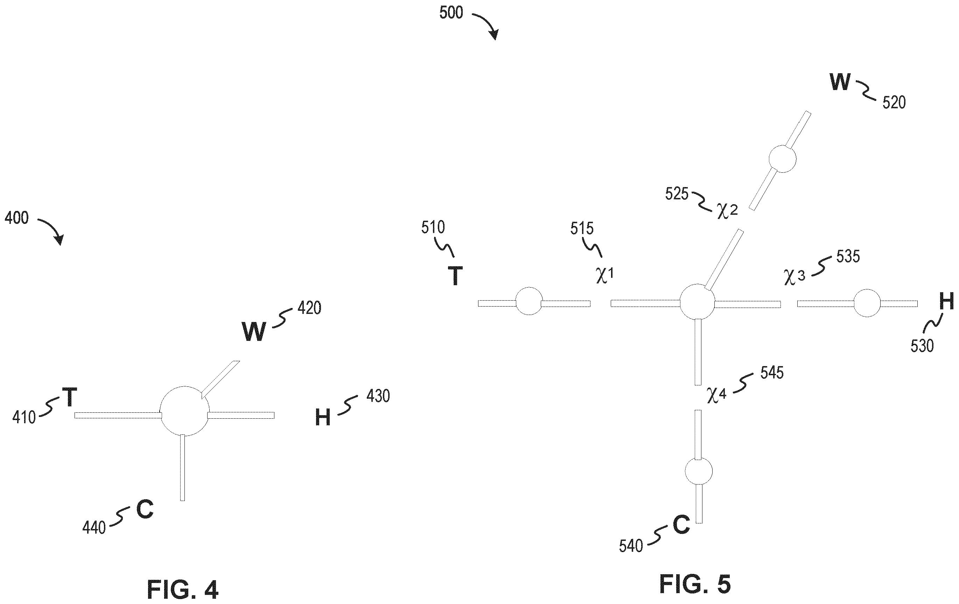

FIG. 4 shows a rank-4 weight tensor 400 (which may also be referred to as a "convolution tensor" or "convolution weight tensor"). Suppose each convolutional layer of the CNN 200 contains a rank-4 weight tensor 400. The four dimensions of the rank-4 weight tensor 400, i.e., $T$ 410, $W$ 420, and $H$ 430, and $C$ 440, correspond respectively to the output channels 410, width 420 of the features in that layer, height 430 of the features in that layer, and number of input channels (filters) 440.

Training of the CNN amounts to finding the optimum parameters for the weight tensors in each layer. For example, where the four dimensions are $T$, $W$, $H$, and $C$, the number of parameters is $T \times W \times H \times C$. Depending on the complexity and size of the problem, the convolutional weight tensors can be both numerous and large, implying a huge number of trainable parameters. For example, each of $T$, $W$, $H$, and $C$ can be integers from 1 to 256. Storing the parameters in memory and fine-tuning and training over such a large parameter space can in principle be computationally very expensive and, at some point, beyond the reach of many devices such as mobile phones or electronic instruments with small memory and a small battery. It may therefore be beneficial or necessary to reduce the number of parameters without sacrificing the accuracy (or with minimal sacrificing of accuracy).

The convolution weight tensors 400 of the CNN can be replaced by a factorized tensor structure, which helps keep the most relevant information learned by the network while discarding the irrelevant parts. The factorized tensor may be obtained from tensor decomposition of the original weight tensor by applying high-order singular value decomposition (HOSVD), also called Tucker decomposition. In the Tucker decomposition, the original tensor is approximated by the contraction of a core tensor and a number of factor matrices corresponding to the rank of the weight tensor, for example, four factor matrices for a rank-4 weight tensor, each of which has a truncated dimension, as shown in FIG. 5. The truncated dimensions, which are also called the factorization ranks of the weight tensor, control the data compression rate and the size of the reduced parameter space after factorization.

FIG. 5 shows the Tucker factorization of the convolution weight tensor to a core tensor and four factor matrices. The $\chi_i$ values are the factorization (truncation) ranks of the weight tensor. In particular, the four dimensions of the weight tensor, $T$ 510, $W$ 520, $H$ 530, and $C$ 540 each have associated factorization ranks $\chi_1$ 515, $\chi_2$

525, $\chi_3$ 535, and $\chi_4$ 545.

As shown in FIG. 5, there are four factorization ranks for each of the dimensions of the factor matrices which are upper-bounded by the size of that dimension, i.e.,

$$\chi_1 \leq T, \quad \chi_2 \leq W, \quad \chi_3 \leq H, \quad \chi_4 \leq C$$

While the original convolution tensor has $T \times W \times H \times C$ parameters, there exist $T \times \chi_1 + W \times \chi_2 + H \times \chi_3 + C \times \chi_4 + \chi_1 \times \chi_2 \times \chi_3 \times \chi_4$ trainable parameters in the factor matrices and their core tensor. In application, the reduction of factors may be, for example, by a factor of 6 or 7, while the final accuracy may be reduced by only 1% or 2%. The memory footprint after factorization may be reduced by a factor of 200, such as from 2MB to 8KB, which may be useful when fitting a CNN into smaller devices (e.g., onto a smaller mobile device).

## 3.4 Canonical Polyadic (CP) Decomposition

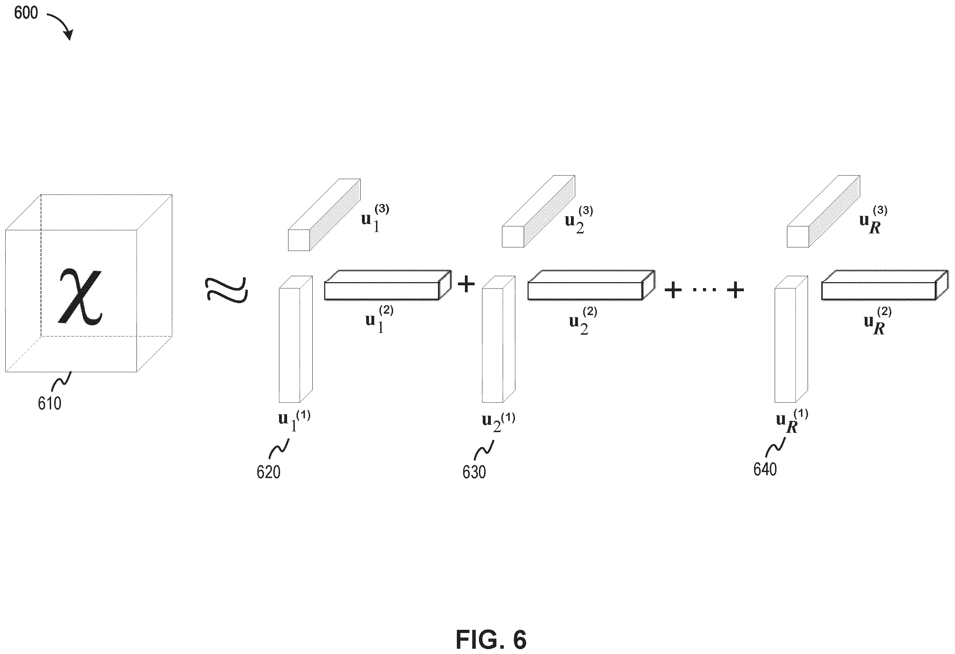

FIG. 6 shows an example CP decomposition 600 of a rank-3 tensor 610 that can be tensorized by the system 100. CP decomposition can be used as an alternative to Tucker decomposition and similarly involves applying decomposition to the convolution weight tensor. Defining the CP decomposition rank as $R$, an $N$-dimensional tensor is factorized as the sum of the tensor product of $N$ one-dimensional vectors $u_r$ (rank-1 tensors) according to equation (1) below:

$$\chi = \sum_{r=1}^{R} \mathbf{u}_r^{(1)} \circ \mathbf{u}_r^{(2)} \circ \dots \circ \mathbf{u}_r^{(N)}$$

The CP decomposition 600 shown in FIG. 6 is for a rank-3 tensor 610 with factorization rank $R$. However, the CP decomposition may be extended to a higher rank tensor (such as rank-4). In FIG. 6, the CP decomposition of rank $R$ factorizes an $N$-dimensional tensor as the sum of the tensor product of $N$ vectors.

The system 100 takes the rank-3 tensor 510 and applies equation (1) to decompose it into the sum of $\mathbf{u}_1^{(1)} \circ \mathbf{u}_1^{(2)} \circ \mathbf{u}_1^{(3)}$ 520, $\mathbf{u}_2^{(1)} \circ \mathbf{u}_2^{(2)} \circ \mathbf{u}_2^{(3)}$ 530, and so on, up to, $\mathbf{u}_R^{(1)} \circ \mathbf{u}_R^{(2)} \circ \mathbf{u}_R^{(3)}$ 540.

## 3.5 Tensor Regression Layer

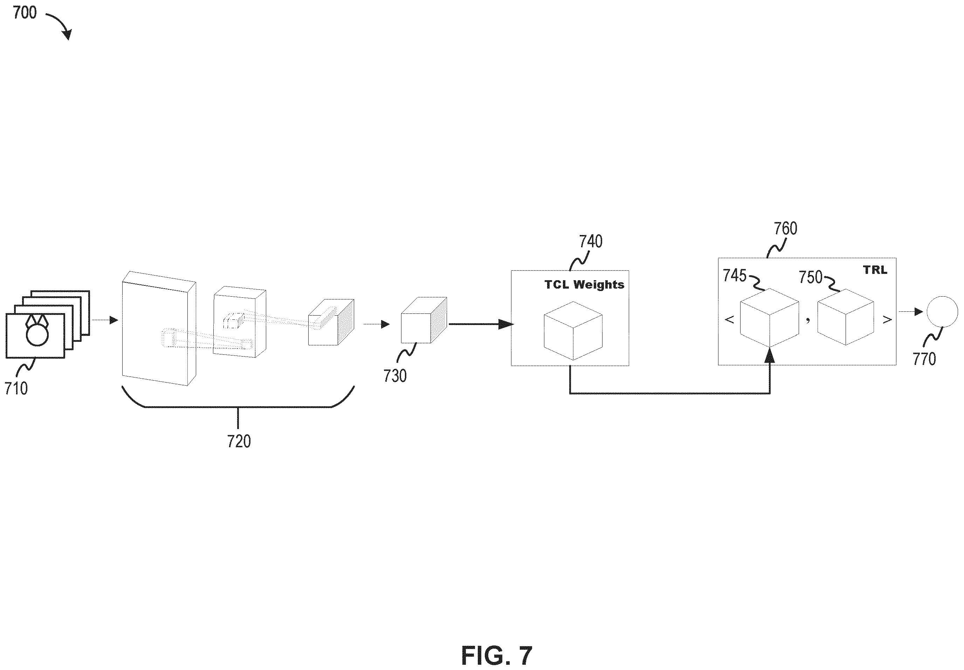

FIG. 7 shows a block diagram of an example embodiment of a CNN 700 showing a tensor regression layer (TRL) 760 that can be tensorized by the system 100 and used in combination with the decomposition techniques described above. The CNN 700 takes an input 710, which contains, for example, an input image or data. Similar to the CNN 200, the CNN 700 may be composed of a feature extraction network 720 and a classification (regression) layer 760. In classical CNNs, the classification layer is a flattened dense layer of the type which is used in classification tasks in standard neural networks. To feed the information from the feature network to the classification network, data is typically flattened to match the input dimension of the dense layer. Flattening of the feature can destroy the correlation between some parts of the data and influence the overall training and classification accuracy.

As shown in FIG. 7, the CNN 700 processes the input 710 by a feature extraction network 720 to obtain the extracted features 730. The extracted features 730 are then input into a tensor contraction layer (TCL) 740 which produces a low-rank weight convolution tensor 745. The convolution tensor 745 can be obtained, for example, using the method steps 330 and 335, or 340 and 345, described above. The convolution tensor 745 is fed directly to the tensor regression layer (TRL) 760 by contracting the convolution tensor 745 and a low-rank weight tensor of the regression layer 750 to produce the output 770.

One of the motivations for a tensor regression layer (TRL) is to avoid data flattening and feed the data out of the feature network as a multidimensional tensor to the classification layer. To this end, it is beneficial to have a regression layer with a rank-$N$ tensor such that it matches the rank (or ranks, such as when there are different indices for the tensors) of the feature network of the CNN, shown herein as TRL 760. The feature network of the CNN contains the convolution weight tensors, for example, the factorized convolution weight tensors, which may be obtained using Tucker decomposition or CP decomposition, as described above. The rank of the feature network corresponds to the rank of the weight convolution tensors of each of the convolutional layers. In this way, the extracted feature from different channels of the CNN is fed directly to the regression layer by contracting the weight convolution tensor (through TCL 740) and the weight tensor of the TRL (through low-rank weights 750) to obtain a tensorized regression layer. This can then enhance the training and overall quality of the tensor CNN (TCNN) model.

## 4 Applications

Implementing the factorization and training of the tensors in standard high-level machine learning packages such as Tensorflow or PyTorch, the system 100 can design systematic training algorithms based on backpropagation and automatic differentiation for finding the optimum values for the parameters of the factorized convolution tensor.

The approaches described herein target the trainable weights of the CNN. However, higher levels of tensorization can also be applied to the classification layers of the CNN which is a standard NN. The trainable weights of the classification layers may be rank-2 matrices which can further be tensorized through matrix product operator MPO (or tensor train) decomposition.

In this setting, the system 100 (or more specifically, machine learning applications of the system 100) may utilize different tensor decompositions (such as Tucker or CP decomposition) to compress the kernels of the convolutional layers and thus reduce the number of parameters in the network. As a result, the new tensorized CNN (TCNN) contains a smaller number of parameters, requires less memory, and can be trained faster, and it would keep a similar accuracy as that in the original CNN. Furthermore, TCNNs can have both scientific and industrial applications for various image processing tasks ranging from production lines of different companies to designing fast, small, and energy-efficient TCNNs for small devices such as mobile phones or FGPAs.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## Claims

1. A system for improving a convolutional neural network, the system comprising at least one processor configured to:

   - receive at least one weight tensor having $N$ parameters, each of the at least one weight tensor corresponding to a convolutional layer of the convolutional neural network;
   - factorize the at least one weight tensor to obtain a corresponding factorized weight tensor, the factorized weight tensor having $M$ parameters, wherein $M < N$; and
   - supply the factorized weight tensor to a classification layer of the convolutional neural network, thereby generating an improved convolutional neural network.

2. The system of claim 1, wherein the at least one processor is further configured to:

   - determine a rank of the at least one weight tensor; and
   - decompose the at least one weight tensor into a core tensor and a number $R$ of factor matrices, where $R$ corresponds to the rank of the weight tensor.

**3.** The system of claim 2, wherein the at least one processor is further configured to:

- provide a number $R$ of factorization ranks $\chi_i$ for $i = 1 \ldots R$, where $R$ corresponds to the rank of the weight tensor such that each $\chi_i$ is upper-bounded by a size of a corresponding dimension $D_i$.

**4.** The system of claim 3, wherein the factor matrices and the core tensor have $(D_1 \times \chi_1 + D_2 \times \chi_2 + \cdots + D_R \times \chi_R) + (\chi_1 \times \chi_2 \times \ldots \times \chi_R)$ trainable parameters.

**5.** The system of claim 4, wherein the rank of the weight tensor $R = 4$ and the dimensions $D_i$ are $T, W, H,$ and $C$, where $T$ is a number of output channels, $W$ is a width of features in the classification layer, $H$ is a height of features in the classification layer, and $C$ is a number of input channels.

**6.** The system of claim 1, wherein the at least one processor is further configured to:

- determine a decomposition rank $R$; and
- factorize the weight tensor as a sum of a number $R$ of tensor products.

**7.** The system of claim 5, wherein the sum of the number $R$ of tensor products is equal to $\sum_{r=1}^{R} \mathbf{u}_r^{(1)} \circ \mathbf{u}_r^{(2)} \circ \ldots \circ \mathbf{u}_r^{(N)}$ , where r is a summation index from 1 to $R$, and each of $\mathbf{u}_r^{(1)}, \mathbf{u}_r^{(2)}, \cdots, \mathbf{u}_r^{(N)}$ is a one-dimensional vector.

**8.** The system of claim 1, wherein the at least one processor is configured to:

- define the classification layer as a rank-$N$ tensor, where $N$ corresponds to a rank of a feature network of the convolutional neural network, where the feature network is comprised of the factorized weight tensor corresponding to each of the at least one weight tensor.

**9.** The system of claim 8, wherein the at least one processor is further configured to:

- contract the factorized weight tensor with a weight tensor of the classification layer to obtain a tensorized regression layer.

**10.** The system of any one of claims 1 to 9, wherein the at least one processor is further configured to:

- produce a class of an input using the improved convolutional neural network.

**11.** A method for improving a convolutional neural network, the method comprising:

- receiving at least one weight tensor having $N$ parameters, each of the at least one weight tensor corresponding to a convolutional layer of the convolutional neural network;
- factorizing the at least one weight tensor to obtain a corresponding factorized weight tensor, the factorized weight tensor having $M$ parameters, wherein $M < N$; and
- supplying the factorized weight tensor to a classification layer of the convolutional neural network, thereby generating an improved convolutional neural network.

**12.** The method of claim 11, further comprising:

- determining a rank of the at least one weight tensor; and
- decomposing the at least one weight tensor into a core tensor and a number $R$ of factor matrices, where $R$ corresponds to the rank of the weight tensor.

**13.** The method of claim 12, further comprising:

- providing a number $R$ of factorization ranks $\chi_i$ for i = 1 ... $R$, where $R$ corresponds to the rank of the weight tensor such that each $\chi_i$ is upper-bounded by a size of a corresponding dimension $D_i$.

**14.** The method of claim 13, wherein the factor matrices and the core tensor have $(D_1 \times \chi_1 + D_2 \times \chi_2 + \cdots + D_R \times \chi_R) + (\chi_1 \times \chi_2 \times \ldots \times \chi_R)$ trainable parameters.

**15.** The method of claim 14, wherein the rank of the weight tensor $R = 4$ and the dimensions $D_i$ are $T, W, H,$ and $C$, where $T$ is a number of output channels, $W$ is a width of features in the classification layer, $H$ is a height of features in the classification layer, and $C$ is a number of input channels.

FIG. 1

FIG. 2

EP 4 369 251 A1

300

310 — Receive weight tensor

320 — Select type of decomposition

**Tucker**

330 — Determine rank of weight tensor

335 — Decompose weight tensor into core tensor and factor matrices

**CP**

340 — Determine decomposition rank R

345 — Factorize weight tensor

350 — Supply weight tensor to classification layer

**TRL**

355 — Define the classification layer as a rank-N tensor

360 — Contract the factorized weight tensor

370 — Produce class of the input

# FIG. 3

FIG. 4

FIG. 5

FIG. 6

**FIG. 7**

Europäisches
Patentamt

European
Patent Office

Office européen
des brevets

## EUROPEAN SEARCH REPORT

Application Number

**EP 22 38 3087**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIAHAO SU ET AL: "Tensorized Spectrum Preserving Compression for Neural Networks", ARXIV.ORG, CORNELL UNIVERSITY LIBRARY, 201 OLIN LIBRARY CORNELL UNIVERSITY ITHACA, NY 14853, 25 May 2018 (2018-05-25), XP080882620, * the whole document * | 1-15 | INV. G06N3/044 G06N3/045 G06N3/0464 G06N3/0495 ADD. G06N3/048 G06N3/084 |

TECHNICAL FIELDS
SEARCHED (IPC)

G06N

The present search report has been drawn up for all claims

| Place of search | Date of completion of the search | Examiner |
|---|---|---|
| The Hague | 26 April 2023 | Manfrin, Max |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

    ........................................................................................................

& : member of the same patent family, corresponding
  document

EPO FORM 1503 03.82 (P04C01)